# EUROPEAN PATENT SPECIFICATION

(11) **EP 1 188 650 B1**
(45) Date of publication and mention of the grant of the patent: **13.06.2007**
(21) Application number: 01203056.5
(22) Date of filing: 10.08.2001
(51) Int. Cl.: B62J 6/00

(54) **Detachable lamp**
Lösbare Lampe
Lampe détachable

(30) Priority: 15.09.2000 NL 1016189
(43) Date of publication of application: 20.03.2002
(73) Proprietor: Spanninga Metaal B.V., 8501 MK Joure (NL)
(72) Inventor: Wybenga, Michiel, Midlum (NL); de Jong, Piet, Heerenveen (NL); Vellinga, Jacob, Joure (NL)
(74) Representative: Vollebregt, Cornelis Jacobus

(56) References cited:
- DE-A- 3 144 034
- DE-A- 3 642 263
- DE-A- 4 320 481
- DE-A- 4 337 456

## Description

The invention relates to a detachable lamp comprising a housing and a support to be attached to a vehicle, to which the housing can be detachably connected, whilst a light source is present in the housing, which light source is connected for its power supply to at least one connection contact in the housing, which connection contact is present on a carrier that is mounted within said housing.

A detachable lamp according to the preamble of claim 1 is known from German patent application no. 31 44 034. With this prior art construction, the housing of the lamp was connected to the support by means of a dovetail connection. A hole is formed in the wall of the housing thereby, through which hole a bent part of a contact spring extends so as to make contact, when the housing of the lamp is being slid onto said support, with a contact that is connected to said support, which contact is present in a surface of the dovetail connection that forms part of the support.

In the position in which the lamp is detached from the support, the part of the contact spring that projects outside the housing is liable to damage. Furthermore, it is not possible thereby to obtain a solid connection between the housing and the support whilst ensuring a proper electrical contact between the various parts.

According to the invention, said support is made up of a substantially U-shaped bracket, wherein at least one of the legs of the bracket to be inserted into the housing for the purpose of fitting the housing on the bracket is provided at its free ends with a further connection contact, which, in the position in which the housing is mounted on the support, is in connection with means present on the carrier for transmitting power from a power source connected to said further connection contact on the support to the connection contact that is connected to the light source.

The use of the bracket-like support makes it possible to effect a solid connection between the housing and the support, whilst the connection contact that is present in the housing is adequately protected, also in the position in which the housing is detached from the support. Also the connection between the connection contact that is present on the free end of the leg of the bracket and the power transmission means present on the carrier will be adequately protected in the interior of the housing in the position in which the lamp is fitted on the support and not be exposed to moisture and the like in unfavourable weather conditions.

The invention will now be explained in more detail with reference to the accompanying figures, which show a possible embodiment of a lamp according to the invention.
Figure 1 is a bottom plan view of a lamp according to the invention.
Figure 2 is a side elevation of the lamp of Figure 1.
Figure 3 is a sectional view over the lamp of Figures 1 and 2, along the line III-III in Figure 1.
Figure 4 is a sectional view of the lamp of Figures 1 and 2, along the line IV-IV in Figure 1.
Figure 5 is a perspective view, seen from above, of the lamp as shown in the preceding figures, seen after a cover has been removed from the housing of the lamp.

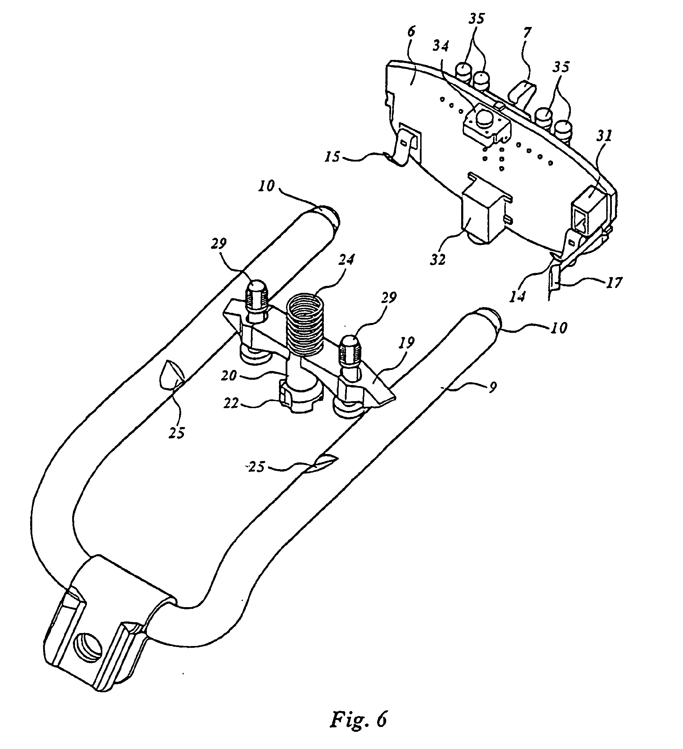

Figure 6 is a perspective view of a number of components of the lamp shown in the preceding figures.

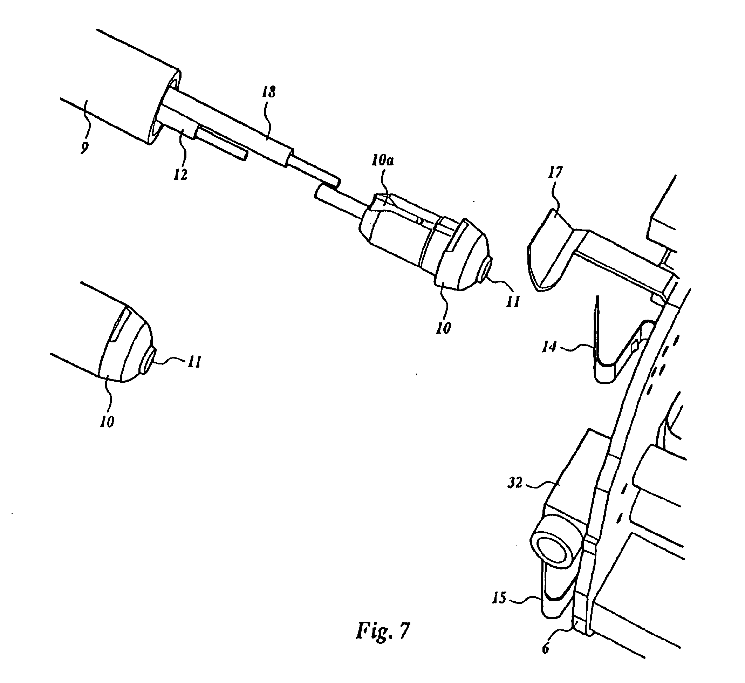

Figure 7 is a perspective view of spaced-apart parts of the carrier and of the support.

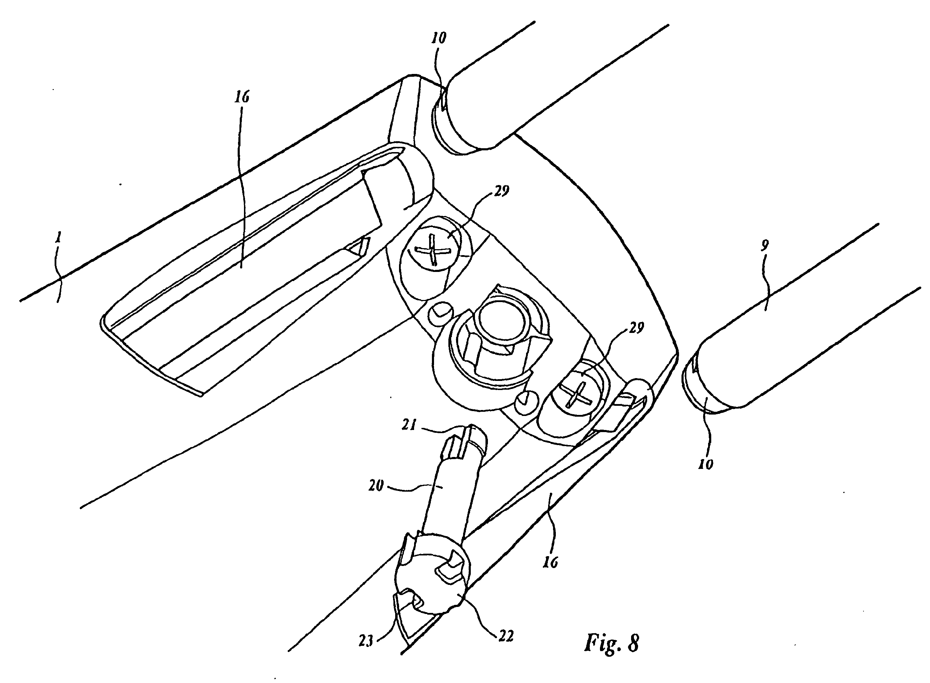

Figure 8 is a larger-scale, bottom plan view of a part of the lamp as shown in the preceding figures, wherein the parts are spaced apart.
Figure 9 is also a larger-scale, bottom plan view of the lamp, seen from a different angle, wherein the parts are spaced apart.

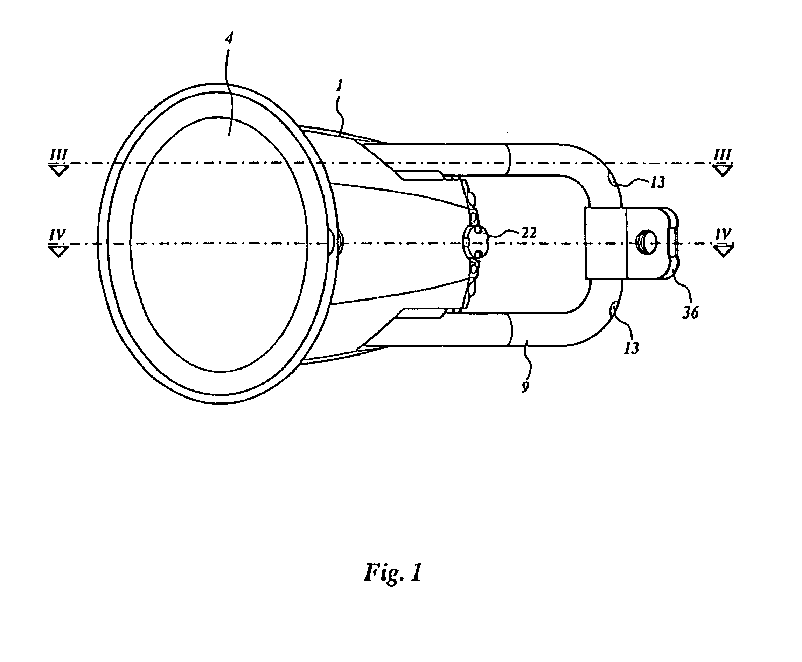

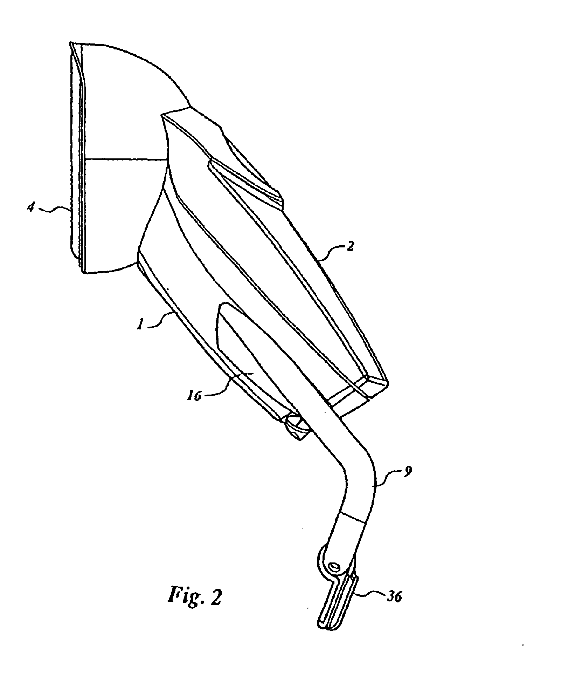

As appears in particular from Figures 1 - 5, the lamp comprises a housing 1, whose interior can be closed by means of a cover 2. A mirror 3 is mounted in an open end of housing 1, which mirror is covered by means of a glass 4 at the open end of the housing. Disposed in said mirror is a light source, for example an incandescent lamp 5.

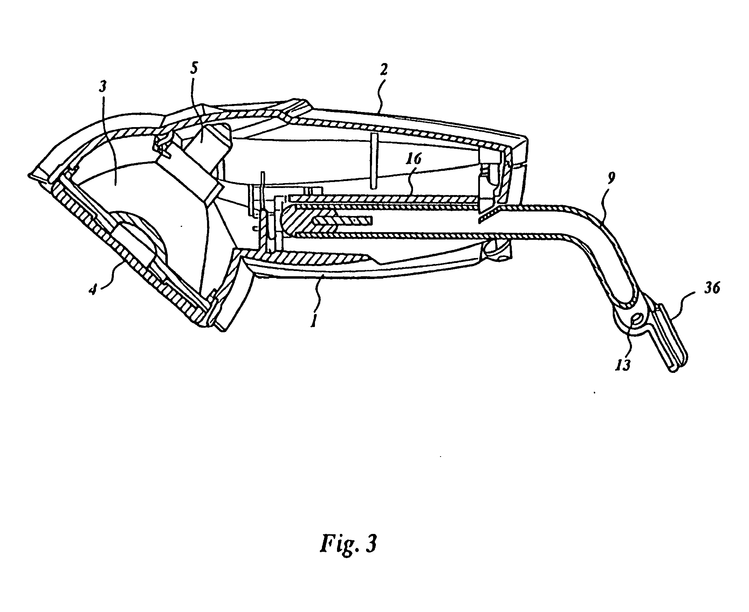

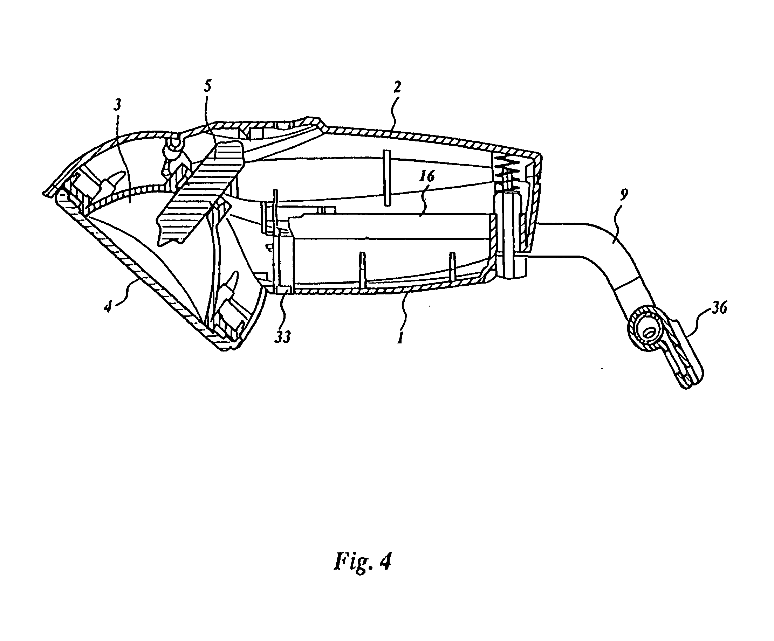

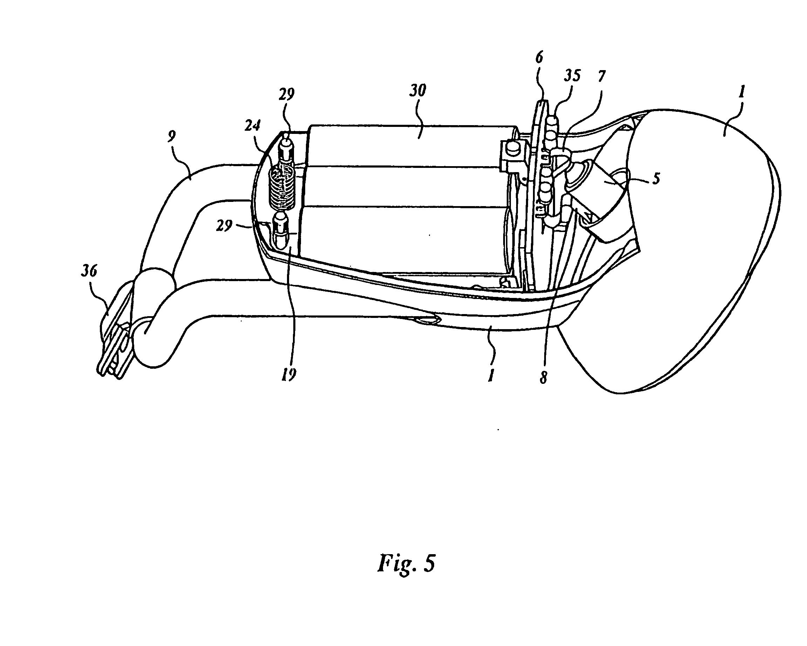

Mounted in housing 1 is a carrier in the form of a so-called printed circuit board 6 (Figure 5). Said printed circuit board, among other parts, is not shown in Figures 3 and 4 for easy reference.

Mounted on printed circuit board 6 are two connection contacts in the form of contact springs 7 and 8, which abut against one end of the incandescent lamp 5 in a usual manner.

The housing of the lamp can be detachably placed on a support 9, which is made up of a substantially U-shaped bracket, which is made of a tubular material.

Sealing caps 10 are inserted in the ends of tubular support 9. Contact points 11 are present on the free ends of said sealing caps, to which contact points the ends of electrical wires 12 are connected. Said electrical wires can be passed outwards through openings 13, which are provided near the two legs of the U-shaped support 9, for example for connection to a power source, such as a dynamo, and/or for connection to a rear light of the vehicle on which the lamp will be present.

The printed circuit board or carrier 6 includes two contact points in the form of contact springs 14 and 15, against which the contact points or further connection contacts 11 of support 9 will abut when the housing of the lamp is present on support 9.

Furthermore, channel-like recesses bounded by wall parts 16 are formed in the housing 1 of the lamp, into which recesses the parallel legs of support 9 can be inserted, whereby the contact points 11 will come into contact with the contact springs 14 and 15 and depress said contact springs slightly so as to ensure a proper contact between the contact springs 14 and 15 and the contact points 11.

In this position, also a contact spring 17 mounted on the carrier or printed circuit board 6 will abut against the outside of the support 9 so as to effect a mass connection of the carrier or printed circuit board 6 to the frame of the vehicle via support 9.

Possibly, a further mass connection can be effected by means of a wire 18 passed through support 9, which is inserted, with one end thereof, into an opening 10a in the sealing cap 10, and with which the contact spring 17 can come into contact.

The support 9 that is inserted into housing 1 can be locked in position within said housing by means of a locking yoke 19 which is disposed in the housing. Locking yoke 19 is centrally provided with an opening, in which a pin 20 is freely rotatably supported.

Present on the notched end of pin 20 are two cams 21. When the ends of pin 20, on which the cams 21 are present, are inserted into the opening formed in the locking yoke 19, said cams will initially be slightly pressed together and subsequently, after having passed the opening, spring outwards again to as to prevent pin 20 being pulled out of the hole in yoke 19, since the yoke is retained between the cams 21 and a head 22 of pin 20 located at the end of pin 20 remote from said cams 21. In the head 22 there have been made notches 23. Pin 20 can be turned about its longitudinal axis by means of a specially shaped key (not shown), which is provided with projections that fit in said notches 23.

The part 21 of pin 20 on which said cams are present is surrounded by the end of a compression spring 24, which, in the fully mounted condition of the lamp, is confined between the cover 2 and the side of the yoke 19 that faces towards the cover. Furthermore, said pin is passed through a hole that is formed in the wall of the housing remote from the cover, in such a manner that head 22 will be accessible from outside housing 1.

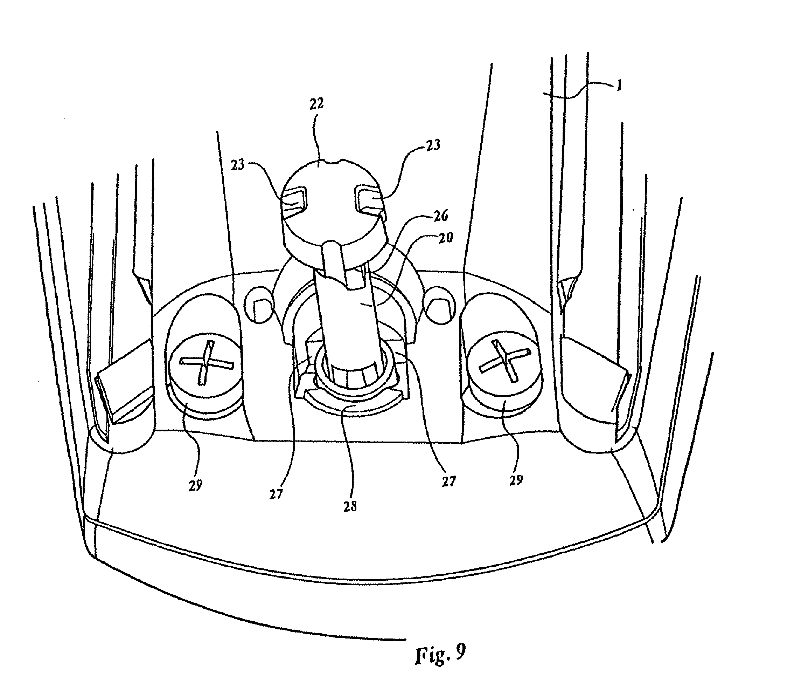

When the two legs of support 9 are inserted into housing 1, said legs will slide under the ends of locking yoke 19 untilsaid yoke ends are positioned opposite notches 25 in the two legs of support 9. In this position the ends of the locking yoke 19 will be urged into notches 25 by means of spring 24, so that support 9 is locked against being retracted from the housing. Said locking engagement can be released by exerting a pushing force on the head 22 of the pin in the longitudinal direction of the pin, as a result of which the yoke will be pushed out of the notches 25 by the pin. To this end, protruding cams 26 are formed on the sides of head 22 that face towards cams 21, as appears in particular from Figure 9. When said cams 26 are positioned opposite recesses 27 formed in housing 1, pin 22 can be moved in housing 1 so as to move the locking yoke against the action of spring 24 by means of cams 26. By turning pin 20 about is longitudinal axis, cams 26 will be positioned opposite stop surfaces 28 of the housing, as a result of which pin 20 will be locked against movement in its longitudinal direction.

Furthermore, holes are present in the locking yoke 19, through which holes bolts 29 extend, by means of which bolts the cover 2 is fixed to the housing 1.

As is furthermore shown in Figure 5, the housing furthermore accommodates batteries 30, which are connected to a contact point 31 on the carrier or printed circuit board 6. Furthermore, a connection element 32 is present on said carrier or printed circuit board, which connection element is accessible, via an opening 33 in the housing, for connecting an adapter by means of which the batteries can be recharged.

Furthermore present on carrier or printed circuit board 6 is a pressure switch 34 for turning the lamp on and off. Said switch can be operated via a depressable part of the cover 2. In addition to this, light diodes 35 are mounted on the printed circuit board, which light diodes are visible through the transparent parts of the cover, so that the user of the vehicle will be able to check the operation of the lamp. It will be apparent that the various parts that are mounted on printed circuit board 6 will be suitably interconnected via the wiring on the printed circuit board.

Support 9 can be attached to the frame of a bicycle or the like vehicle, and be put in a desired position thereby, by means of a usual clamping element.

By mounting all the components, such as contact springs for connection to the dynamo, the headlight and the rear light and earth, the contact point for the charging adaptor, the switch and the light diodes, on a separate printed circuit board, an efficient and compact construction is obtained. The connection contacts on the support and on the printed circuit board can be accommodated within the housing, where they are adequately protected. Housing can be readily connected to the support 9 and be detached therefrom without much effort. The contact points on the ends of the support can be of sturdy construction.

## Claims

1. A detachable lamp comprising a housing (1) and a support (9) to be attached to a vehicle, to which the housing (1) can be detachably connected, whilst a light source (5) is present in the housing (1), which light source (5) is connected for its power supply to at least one connection contact (7) in the housing (1), which connection contact (7) is present on a carrier (6) that is mounted within said housing (1) and wherein said support (9) comprises at one end a further connection contact (11), which, in the position in which the housing (1) has been mounted on the support (9), is in connection with means present in the housing (1) for transmitting power from a power source connected to said further connection contact (11) on the support (9) to the connection contact (7) that is connected to a light source (5), **characterized in that** said support (9) is made up of an U-shaped bracket, having two substantially parallel legs situated at a distance from each other, said legs being inserted over at least part of their length in the housing (1) when the housing (1) has been mounted on the U-shaped bracket (9) and wherein at least one of the legs of the bracket (9) to be inserted into the housing (1) for the purpose of mounting the housing (1) on the bracket (9) is provided at its free end with said further connection contact (11) for contacting a contact (14) on said carrier (5) in the housing (1).

2. A lamp according to claim 1, **characterized in that** said carrier (5) is made up of a printed circuit board.

3. A lamp according to claim 2, **characterized in that** on the end of the leg of the bracket (9) to be inserted into the housing there is the further connection contact in the form of a contact point (11), which abuts against a contact spring (14) on said printed circuit board (15) in the position in which the housing (1) is fitted on the bracket (9).

4. A lamp according to any one of the preceding claims, **characterized in that** the further connection contacts (11) are present on the free ends of the two legs of said bracket (9).

5. A lamp according to any one of the preceding claims, **characterized in that** the contact spring (14) which co-operates with said bracket (9) is mounted on the printed circuit board (5) for the purpose of effecting an earth connection.

6. A lamp according to any one of the preceding claims, **characterized in that** at least one light diode (35) is mounted on said printed circuit board (5), which light diode is visible through a transparent part of the housing (1).

7. A lamp according to any one of the preceding claims, **characterized in that** a pressure switch (34) is mounted on said printed circuit board (5), which pressure switch (34) can be operated from outside the housing (1) via a flexible, depressable part of the housing (5).

8. A lamp according to any one of the preceding claims, **characterized in that** a connecting element (32), which is accessible from outside, is mounted on said printed circuit board (5) for connecting an adaptor for recharging a battery (30) accommodated within the housing.

9. A lamp according to any one of the preceding claims, **characterized in that** said power source is formed by a dynamo which is mounted on the vehicle.

10. A lamp according to any one of the preceding claims, **characterized in that** a springing locking element (19) is mounted in the housing, which engages the U-shaped bracket (9) in the position in which said bracket and said housing (1) are coupled so as to prevent said bracket (9) from moving with respect to said housing (1).

11. A lamp according to claim 10, **characterized in that** said locking element (19) is adjustable by means of a pin (20) which is accessible from outside the housing, which pin (20) is movable in its longitudinal direction in a first position for the purpose of moving the locking element (19) in a direction away from said bracket (9), and which is locked against movement in a second position, in which it is turned in comparison with said first position.

12. A lamp according to claim 10 or 11, **characterized in that** the U-shaped bracket (9) is provided with recesses (25) for receiving parts of the locking element (19) in the position of use of the lamp.

## Patentansprüche

1. Lösbare Lampe, die ein Gehäuse (1) und eine Stütze (9) umfasst, die an einem Fahrzeug befestigt werden soll, mit dem das Gehäuse (1) lösbar verbunden werden kann, während eine Lichtquelle (5) im Gehäuse (1) vorhanden ist, wobei die Lichtquelle (5) zu ihrer Energieversorgung mit mindestens einem Verbindungskontakt (7) im Gehäuse (1) verbunden ist, wobei der Verbindungskontakt (7) auf einem Träger (6) vorhanden ist, der in dem Gehäuse (1) befestigt ist, und wobei die Stütze (9) an einem Ende einen weiteren Verbindungskontakt (11) umfasst, der in der Position, in der das Gehäuse (1) auf der Stütze (9) befestigt worden ist, mit Mitteln zur Übertragung von Energie von einer Energiequelle, die am Gehäuse (1) vorhanden sind, in Verbindung steht, die mit dem weiteren Verbindungskontakt (11) auf der Stütze (9) mit dem Verbindungskontakt (7) verbunden ist, der mit einer Lichtquelle (5) verbunden ist, **dadurch gekennzeichnet, dass** die Stütze (9) aus einer U-förmigen Klammer hergestellt ist, die zwei im Wesentlichen parallele Abschnitte aufweist, die in einem Abstand von einander angeordnet sind, wobei die Abschnitte über zumindest einen Teil ihrer Länge in das Gehäuse (1) eingeführt sind, wenn das Gehäuse (1) auf der U-förmigen Klammer (9) befestigt worden ist, und wobei mindestens einer der Abschnitte der Klammer (9), der zum Zweck der Befestigung des Gehäuses (1) auf der Klammer (9) in das Gehäuse (1) eingeführt werden soll, an seinem freien Ende mit dem weiteren Verbindungskontakt (11) zum Kontaktieren eines Kontakts (14) auf dem Träger (5) im Gehäuse (1) vorgesehen ist.

2. Lampe nach Anspruch 1, **dadurch gekennzeichnet, dass** der Träger (5) aus einer gedruckten Leiterplatte hergestellt ist.

3. Lampe nach Anspruch 2, **dadurch gekennzeichnet, dass** es auf dem Ende des Abschnitts der Klammer (9), der in das Gehäuse eingeführt werden soll, den weiteren Verbindungskontakt in der Form eines Kontaktpunktes (11) gibt, der an eine Kontaktfeder (14) auf der gedruckten Leiterplatte (15) in der Position, in der das Gehäuse (1) auf der Klammer (9) befestigt ist, angrenzt.

4. Lampe nach einem der vorhergehenden Ansprüche, **dadurch gekennzeichnet, dass** die weiteren Verbindungskontakte (11) auf den freien Enden der beiden Abschnitte der Klammer (9) vorhanden sind.

5. Lampe nach einem der vorhergehenden Ansprüche, **dadurch gekennzeichnet, dass** die Kontaktfeder (14), die mit der Klammer (9) zusammenarbeitet, zum Zweck des Bewirkens einer Erdverbindung auf der gedruckten Leiterplatte (5) befestigt ist.

6. Lampe nach einem der vorhergehenden Ansprüche, **dadurch gekennzeichnet, dass** mindestens eine Leuchtdiode (35) auf der gedruckten Leiterplatte (5) befestigt ist, wobei die Leuchtdiode durch einen lichtdurchlässigen Teil des Gehäuses (1) sichtbar ist.

7. Lampe nach einem der vorhergehenden Ansprüche, **dadurch gekennzeichnet, dass** ein Druckschalter (34) auf der gedruckten Leiterplatte (5) befestigt ist, wobei der Druckschalter (34) von außerhalb des Gehäuses (1) über einen flexiblen, drückbaren Teil des Gehäuses (5) betätigt werden kann.

8. Lampe nach einem der vorhergehenden Ansprüche, **dadurch gekennzeichnet, dass** ein Verbindungselement (32), das von außen zugänglich ist, auf der gedruckten Leiterplatte (5) zur Verbindung eines Adapters zum Aufladen einer Batterie (30), die in dem Gehäuse untergebracht ist, befestigt ist.

9. Lampe nach einem der vorhergehenden Ansprüche, **dadurch gekennzeichnet, dass** die Energiequelle von einem Dynamo gebildet ist, der auf dem Fahrzeug befestigt ist.

10. Lampe nach einem der vorhergehenden Ansprüche, **dadurch gekennzeichnet, dass** ein federndes Sperrelement (19) in dem Gehäuse befestigt ist, das in der Position, in der die Klammer und das Gehäuse (1) mit einander verbunden sind, um zu verhindern, dass sich die Klammer (9) in Bezug auf das Gehäuse (1) bewegt, in die U-förmige Klammer (9) eingreift.

11. Lampe nach Anspruch 10, **dadurch gekennzeichnet, dass** das Sperrelement (19) durch einen Stift (20), der von außerhalb des Gehäuses zugänglich ist, einstellbar ist, wobei der Stift (20) in seiner Längsrichtung in einer ersten Position zum Zweck des Bewegens des Sperrelements (19) in einer Richtung weg von der Klammer (9) bewegbar ist, und der in einer zweiten Position, in die er im Vergleich zur ersten Position geschwenkt wird, gegen Bewegung gesperrt ist.

12. Lampe nach Anspruch 10 oder 11, **dadurch gekennzeichnet, dass** die U-förmige Klammer (9) mit Ausbuchtungen (25) zur Aufnahme vom Teilen des Sperrelements (19) in der Gebrauchsposition der Lampe versehen ist.

## Revendications

1. Lampe détachable comprenant un logement (1) et un support (9) devant être fixé à un véhicule, auquel le logement (1) peut être relié de manière détachable, une source lumineuse (5) étant présente dans le logement (1), laquelle source lumineuse (5) est reliée pour son alimentation en courant à au moins un contact de connexion (7) dans le logement (1), lequel contact de connexion (7) est présent sur un support (6) qui est monté à l'intérieur dudit logement (1) et dans lequel ledit support (9) comprend à une extrémité un autre contact de connexion (11), qui, dans la position dans laquelle le logement (1) a été monté sur le support (9), communique avec des moyens présents dans le logement (1) permettant de transmettre du courant depuis une source de courant reliée audit autre contact de connexion (11) sur le support (9) au contact de connexion (7) qui est relié à une source lumineuse (5), **caractérisée en ce que** ledit support (9) est constitué d'un support en forme de U, ayant deux pieds essentiellement parallèles situés à distance l'un de l'autre, lesdits pieds étant insérés sur au moins une partie de leur longueur dans le logement (1) lorsque le logement (1) a été monté sur le support en forme de U (9) et dans laquelle au moins un des pieds du support (9) qui doit être inséré dans le logement (1) afin de monter le logement (1) sur le support (9) est disposé à son extrémité libre avec ledit autre contact de connexion (11) permettant de mettre en contact un contact (14) sur ledit support (5) dans le logement (1).

2. Lampe selon la revendication 1, **caractérisée en ce que** dans ledit support (5) se compose d'une carte à circuit imprimé.

3. Lampe selon la revendication 2, **caractérisée en ce que** sur l'extrémité du pied du support (9) devant être insérée dans le logement, se trouve l'autre contact de connexion sous forme d'un point de contact (11), qui est en saillie contre un ressort de contact (14) sur ladite carte à circuit imprimé (15) dans la position dans laquelle le logement (1) est placé sur le support (9).

4. Lampe selon l'une quelconque des revendications précédentes, **caractérisée en ce que** les autres contacts de connexion (11) sont présents sur les extrémités libres des deux pieds dudit support (9).

5. Lampe selon l'une quelconque des revendications précédentes, **caractérisée en ce que** le ressort de contact (14) qui coopère avec ledit support (9) est monté sur la carte à circuit imprimé (5) afin d'effectuer la mise à la terre.

6. Lampe selon l'une quelconque des revendications précédentes, **caractérisée en ce que** au moins une diode luminescente (35) est montée sur ladite carte à circuit imprimé (5), laquelle diode luminescente est visible à travers une partie transparente du logement (1).

7. Lampe selon l'une quelconque des revendications précédentes, **caractérisée en ce qu'**un manostat (34) est monté sur ladite carte à circuit imprimé (5), lequel manostat (34) peut être actionné depuis l'extérieur du logement (1) via une partie souple, abaissable du logement (5).

8. Lampe selon l'une quelconque des revendications précédentes, **caractérisée en ce qu'**un élément de connexion (32), qui est accessible depuis l'extérieur, est monté sur ladite carte à circuit imprimé (5) pour raccorder un adaptateur destiné à recharger une batterie (30) logée à l'intérieur du logement.

9. Lampe selon l'une quelconque des revendications précédentes, **caractérisée en ce que** ladite source de courant comporte une dynamo qui est montée sur le véhicule.

10. Lampe selon l'une quelconque de revendications précédentes, **caractérisée en ce que** un élément de blocage à ressort (19) est monté dans le logement, qui est en prise avec le support en forme de U (9) dans la position dans laquelle ledit support et ledit logement (1) sont couplés de sorte à empêcher ledit support (9) de se déplacer par rapport audit logement (1).

11. Lampe selon la revendication 10, **caractérisée en ce que** ledit élément de blocage (19) est réglable au moyen d'une broche (20) qui est accessible depuis l'extérieur du logement, laquelle broche (20) peut se déplacer dans son sens longitudinal dans une première position pour déplacer l'élément de blocage (19) dans un sens s'éloignant dudit support (9), et qui est bloquée en cas de mouvement dans une seconde position, dans laquelle elle est tournée par rapport à ladite première position.

12. Lampe selon la revendication 10 ou 11, **caractérisée en ce que** le support en forme de U (9) est doté d'évidements (25) destinés à recevoir des parties de l'élément de blocage (19) dans la position d'utilisation de la lampe.
